# EUROPEAN PATENT SPECIFICATION

(11) **EP 4 462 061 B1**
(45) Date of publication and mention of the grant of the patent: **06.05.2026**
(21) Application number: 24162986.4
(22) Date of filing: 12.03.2024
(51) Int. Cl.: F28F 9/00, F28D 9/00

(54) **MODULAR HEAT EXCHANGER FOR AN AIRCRAFT POWERPLANT**
MODULARER WÄRMETAUSCHER FÜR EIN FLUGZEUGTRIEBWERK
ÉCHANGEUR DE CHALEUR MODULAIRE POUR UNE CENTRALE ÉLECTRIQUE D'AÉRONEF

(30) Priority: 12.05.2023 US 202318196662
(43) Date of publication of application: 13.11.2024
(73) Proprietor: RTX Corporation, Farmington, CT 06032 (US)
(72) Inventor: SNYDER, Jacob C., East Haddam, 06423 (US)
(74) Representative: Dehns

(56) References cited:
- US-A- 2 792 200
- US-A1- 2009 031 695
- US-A1- 2022 282 670

## Description

### TECHNICAL FIELD

This disclosure relates generally to an aircraft powerplant and, more particularly, to a heat exchanger for the aircraft powerplant.

### BACKGROUND

An aircraft powerplant such as a gas turbine engine may include one or more heat exchangers to transfer heat energy between fluids. As fluid cooling and/or heating needs increase, sizes of the heat exchangers also increase. Incorporating large heat exchangers within a gas turbine engine, however, can be challenging both for assembly / disassembly as well as for withstanding thermally induced stresses. Manufacturing large heat exchangers may also be challenging. There is a need in the art therefore for an improved heat exchanger.

US 2009/031695 A1 discloses prior art methods and apparatus for mixing fluid in turbine engines.

US 2,792,200 A discloses a prior art toroidal type heat exchanger.

US 2022/282670 A1 discloses a prior art three-stream engine having a heat exchanger.

### SUMMARY OF THE DISCLOSURE

According to an aspect of the present disclosure, there is provided an apparatus for an aircraft powerplant as set forth in claim 1. Further embodiments are provided as set forth in claims 2 to 14.

The foregoing features and the operation of the invention will become more apparent in light of the following description and the accompanying drawings.

### BRIEF DESCRIPTION OF THE DRAWINGS

FIG. 1 is a perspective illustration of a modular heat exchanger.
FIG. 2 is a schematic illustration of the heat exchanger with a full-hoop body.
FIG. 3 is a perspective illustration of a frame for the heat exchanger.
FIG. 4 is a perspective illustration of a heat exchanger core for the heat exchanger.
FIG. 5 is a schematic illustration of an axial side of the heat exchanger core.
FIG. 6 is a schematic illustration of a lateral side of the heat exchanger core.
FIG. 7 is a partial schematic illustration of the heat exchanger core housed within the frame.
FIG. 8 is a schematic illustration of an axial side of the heat exchanger core housed within the frame.
FIG. 9 is a partial schematic illustration of the heat exchanger core housed within the frame and retained by one or more retainers.
FIG. 10 is a partial schematic illustration of the heat exchanger core housed within the frame and retained by a mount.
FIG. 11 is a perspective illustration of the heat exchanger with one or more axial arrays of the heat exchanger cores.
FIG. 12 is a partial schematic illustration of a gas turbine engine.

### DETAILED DESCRIPTION

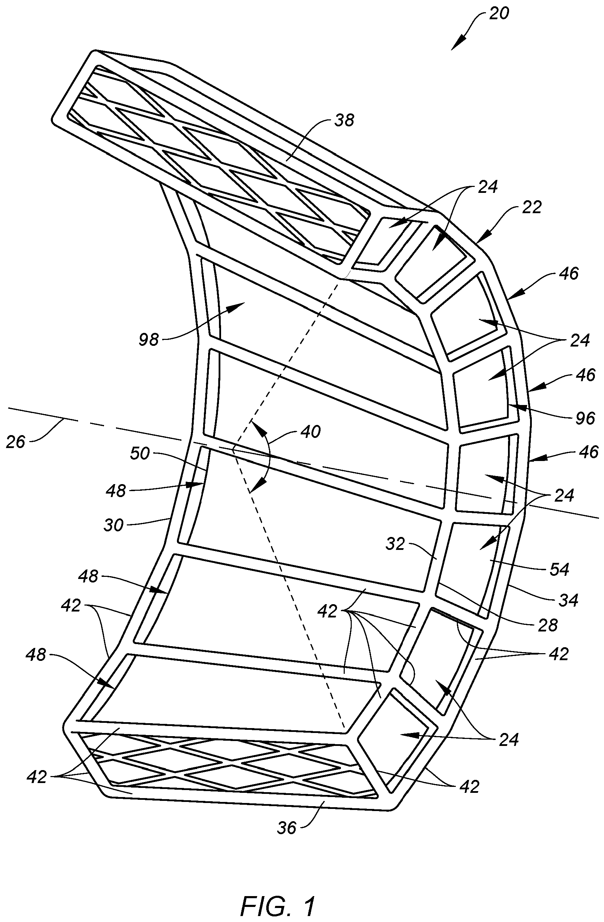

FIG. 1 illustrates a modular heat exchanger 20 for a powerplant of an aircraft. The aircraft may be an airplane, a drone (e.g., an unmanned aerial vehicle (UAV)) or any other manned or unmanned aerial vehicle or system. The aircraft powerplant may be configured as, or otherwise included as part of, a propulsion system for the aircraft. The aircraft powerplant may also or alternatively be configured as, or otherwise included as part of, an electrical power system for the aircraft. The heat exchanger 20 of FIG. 1 includes a heat exchanger (HX) frame 22 and one or more heat exchanger (HX) cores 24.

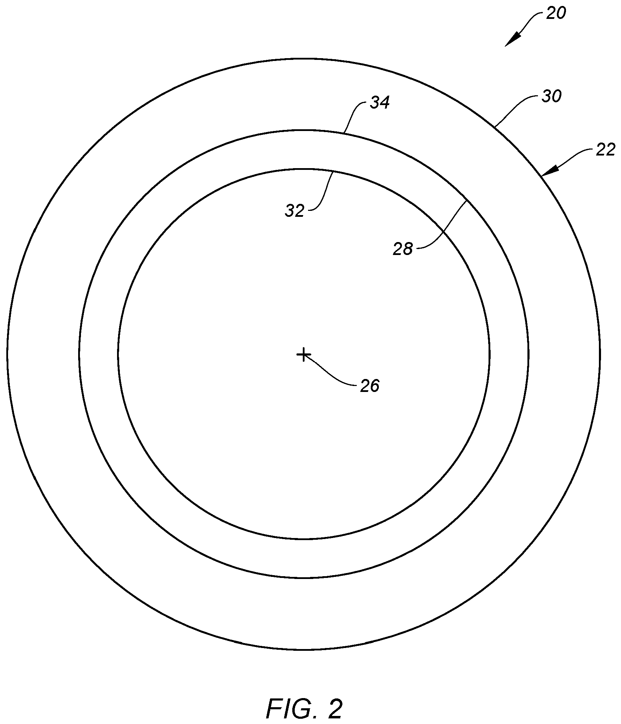

The heat exchanger 20 and its HX frame 22 extend axially along an axis 26 from an axial first side 28 of the heat exchanger 20 to an axial second side 30 of the heat exchanger 20. The axis 26 may be a centerline axis of the aircraft powerplant and/or a rotational axis of one or more rotors included in the aircraft powerplant. The heat exchanger 20 and its HX frame 22 extend radially (in an outward direction away from the axis 26) from a radial inner side 32 of the heat exchanger 20 to a radial outer side 34 of the heat exchanger 20. The heat exchanger 20 of FIG. 1 and its HX frame 22 extend a number of degrees circumferentially about the axis 26 between and to opposing circumferential sides 36 and 38 of the heat exchanger 20, defining an angle 40 between the HX circumferential sides relative to the axis 26. This angle 40 is between one-hundred degrees (100°) and one-hundred and forty degrees (140°); e.g., one-hundred and twenty degrees (120°). However, in other embodiments, the angle may be less than one-hundred degrees (e.g., between 30° and 90°) or greater than one-hundred and forty degrees (e.g., between 160° and 180°). With such an arrangement, the heat exchanger 20 and its HX frame 22 may each have an arcuate geometry. Examples of this arcuate geometry include, but are not limited to, a partial frustoconical geometry or a partial cylindrical geometry. The present disclosure, however, is not limited to such exemplary arcuate geometries. Moreover, referring to FIG. 2, the heat exchanger 20 and its HX frame 22 (schematically shown) may alternatively extend circumferentially completely around the axis 26 providing the heat exchanger 20 and its HX frame 22 with a full-hoop (e.g., annular) geometry.

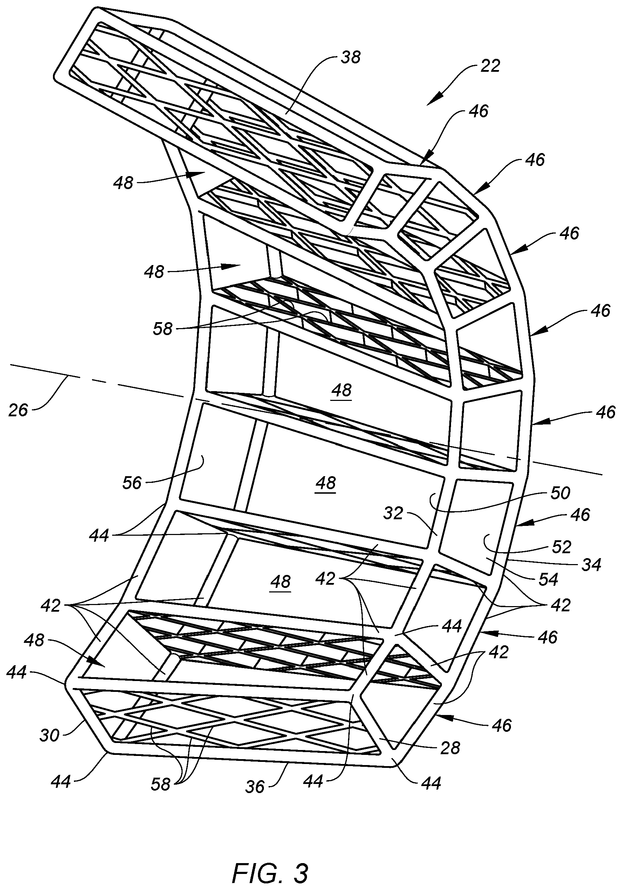

The HX frame 22 may be configured to form an exoskeleton (e.g., a rigid, exterior framework) around the HX cores 24 collectively. The HX frame 22 may also be configured to form an exoskeleton around one or more of the HX cores 24 individually. The HX frame 22 of FIG. 3, for example, is configured as a lattice framework; e.g., a three-dimensional lattice structure. This HX frame 22 includes a plurality of elongated frame members 42 (only some of which are labeled for ease of illustration); e.g., lattice members. Examples of the frame members 42 include, but are not limited to, beams, solid struts, hollow (e.g., tubular) struts, rigid ligaments, and various other types of solid or hollow links. Each of the frame members 42 extends longitudinally between and to opposing longitudinal ends of that frame member 42.

The frame members 42 are interconnected with one another at various inter-member nodes 44 (only some of which are labeled for ease of illustration). In particular, each longitudinal end of each frame member 42 of FIG. 3 is connected to (e.g., formed integral with, bonded to, etc.) one or more other frame members 42 at their respective longitudinal ends. For example, each longitudinal end of each frame member 42 disposed at a respective HX circumferential side 36, 38 may be connected to the longitudinal ends of two other frame members 42. Each longitudinal end of each other frame member 42 (e.g., frame members 42 not at a respective HX circumferential side 36, 38) may be connected to the longitudinal ends of three other frame members 42. However, each frame member 42 may be self-supported (e.g., not connected to any other members) between its longitudinal ends / the respective inter-member nodes 44.

The frame members 42 may be arranged to form one or more hexahedral units 46; e.g., six-sided lattice units or cells. More particularly, the frame members 42 may be arranged to form edges of the hexahedral units 46, where the edges may be straight or slightly curved. The hexahedral units 46 of FIG. 3 are arranged circumferentially about the axis 26 in a side-by-side array. Each of these hexahedral units 46 may share one or more frame members 42 with each circumferentially neighboring (e.g., adjacent) hexahedral unit 46. Each of the hexahedral units 46 of FIG. 3 extends axially between and to the HX first side 28 and the HX second side 30. Each of the hexahedral units 46 may have a tapered configuration. Each hexahedral unit 46 of FIG. 3, for example, laterally (e.g., circumferentially or tangentially) tapers as that hexahedral unit 46 extends radially inward from the HX outer side 34 to the HX inner side 32. Each hexahedral unit 46 of FIG. 3 also (or may alternatively) laterally tapers as that hexahedral unit 46 extends axially from the HX second side 30 to the HX first side 28. The present disclosure, however, is not limited to such an exemplary arrangement. For example, a radial thickness of each hexahedral unit 46 may alternatively be uniform as that hexahedral unit 46 extends axially between the HX second side 30 and the HX first side 28.

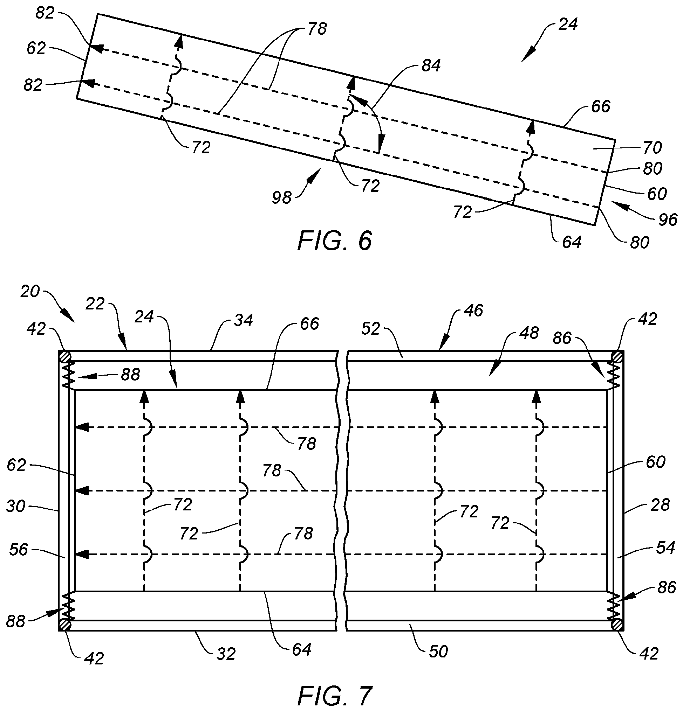

The HX frame 22 also includes one or more internal core receptacles 48. Each core receptacle 48 of FIG. 3 is formed by and/or within a respective one of the hexahedral units 46. Each core receptacle 48 may be fluidly coupled with / extend radially between a respective radial inner port 50 at the HX inner side 32 and a respective radial outer port 52 at the HX outer side 34 (see also FIG. 7). Each core receptacle 48 may be fluidly coupled with / extend axially between a respective axial first port 54 at the HX first side 28 and a respective axial second port 56 at the HX second side 30 (see also FIG. 7). A port laterally between each laterally neighboring pair of the core receptacles 48 may be open. Alternatively, the port may be filled with one or more stiffeners 58. A lattice of stiffeners 58, for example, may reinforce the HX frame 22 between each laterally neighboring pair of the core receptacles 48.

The HX frame 22 may be configured as a monolithic body. The HX frame 22 and its various members, for example, may be cast, machined, additively manufactured and/or otherwise formed as a single, unitary body. The present disclosure, however, is not limited to such an exemplary monolithic constructure. Each hexahedral unit 46 or sets of the hexahedral units 46, for example, may alternatively be discretely formed and then connected together to provide the HX frame 22. The HX frame 22 and its various members may be constructed from metal or a composite material capable of withstanding required heat loads of the heat exchanger 20.

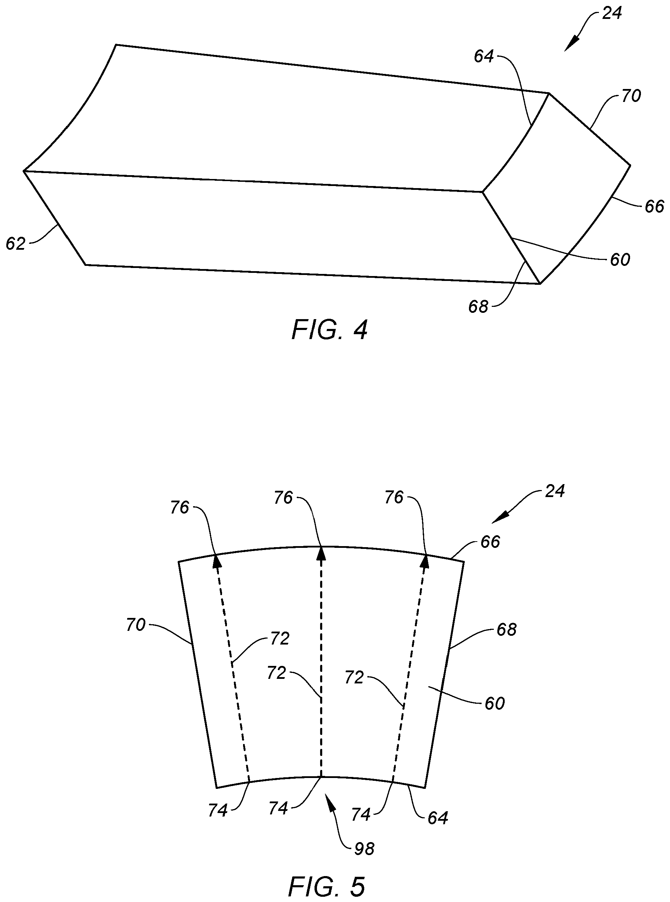

Referring to FIG. 4, each HX core 24 extends axially along the axis 26 (see FIG. 1) from an axial first side 60 of the respective HX core 24 to an axial second side 62 of the respective HX core 24. Each HX core 24 extends radially (in the outward direction) from a radial inner side 64 of the respective HX core 24 to a radial outer side 66 of the respective HX core 24. Each HX core 24 extends circumferentially about the axis 26 between and to opposing circumferential sides 68 and 70 of the HX core 24. With such an arrangement, each HX core 24 may have an arcuate geometry. Examples of this arcuate geometry include, but are not limited to, a partial frustoconical geometry or a partial cylindrical geometry. The present disclosure, however, is not limited to such exemplary arcuate geometries.

Each HX core 24 may have a tapered configuration. Each HX core 24 of FIG. 4, for example, laterally (e.g., circumferentially or tangentially) tapers as that HX core 24 extends radially inward from the core outer side 66 to the core inner side 64. Each HX core 24 of FIG. 4 also (or may alternatively) laterally tapers as that HX core 24 extends axially from the core second side 62 to the core first side 60. The present disclosure, however, is not limited to such an exemplary arrangement. For example, a radial thickness of each HX core 24 may alternatively be uniform as that HX core 24 extends axially between the core second side 62 to the core first side 60.

Referring to FIG. 5, each HX core 24 may include one or more radial passages 72. Each of these radial passages 72 extends radially across (e.g., through) the respective HX core 24 from an inlet 74 to the respective radial passage 72 at the core inner side 64 to an outlet 76 from the respective radial passage 72 at the core outer side 66. However, the radial passage inlet 74 and the radial passage outlet 76 may alternatively be respectively disposed at the core outer side 66 and the core inner side 64.

Referring to FIG. 6, each HX core 24 may include one or more axial passages 78. Each of these axial passages 78 extends axially across (e.g., through) the respective HX core 24 from an inlet 80 to the respective axial passage 78 at the core first side 60 to an outlet 82 from the respective axial passage 78 at the core second side 62. However, the axial passage inlet 80 and the axial passage outlet 82 may alternatively be respectively disposed at the core second side 62 and the core first side 60.

With the foregoing arrangement, each HX core 24 may be configured as a cross-flow heat exchange unit. Each axial passage 78 of FIG. 6, for example, is angularly offset from one or more of the radial passages 72 by an included offset angle 84. This offset angle 84 may be a ninety degree (90°), right angle. Alternatively, the offset angle 84 may be an acute or obtuse angle; e.g., within ten or twenty degrees (10-20°) of the right angle. The present disclosure, however, is not limited to such an exemplary cross-flow arrangement. One or more of the HX cores 24, for example, may alternatively be configured as a counterflow heat exchange unit or a parallel flow heat exchange unit.

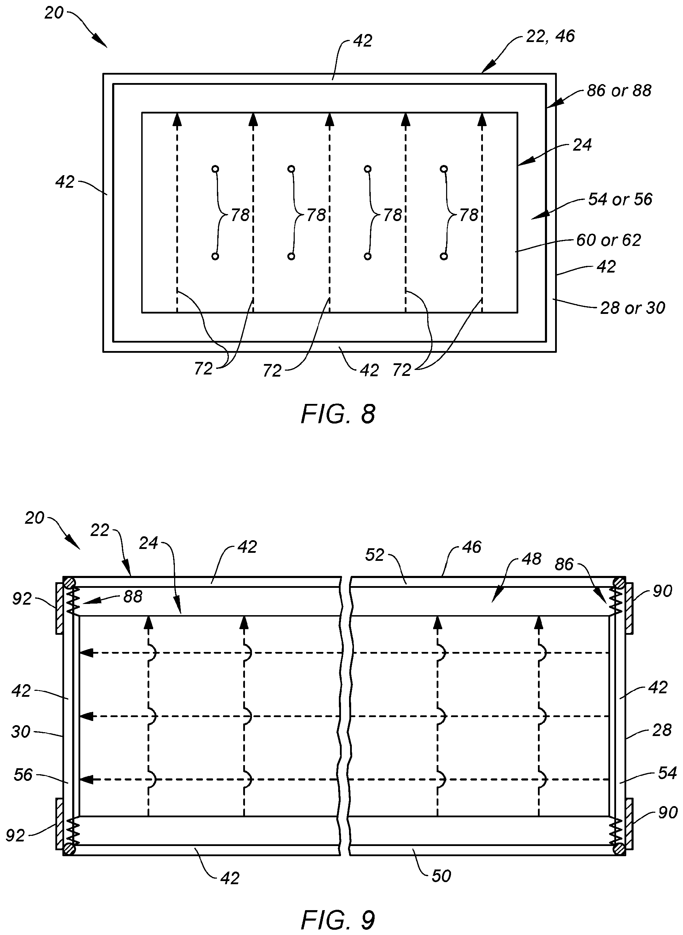

Referring to FIG. 1, each of the HX cores 24 is housed within a respective one of the hexahedral units 46. Each HX core 24 of FIG. 1, for example, is (e.g., completely) housed within a respective one of the core receptacles 48. Each of the HX cores 24 is also flexibly, loosely or otherwise moveably retained within the respective core receptacle 48. Each HX core 24 of FIG. 7, for example, may be movably secured to the HX frame 22 and its respective hexahedral unit 46 with one or more seal elements 86 and 88. The first seal element 86 of FIG. 7 is disposed at (e.g., on, adjacent or proximate) the respective core first side 60. The second seal element 88 of FIG. 7 is disposed at the respective core second side 62. Each of these seal elements 86, 88 may be compressed between the HX core 24 and one or more of the frame members 42 of the respective hexahedral unit 46. With this arrangement, each side 60 or 62 of the HX core 24 is moveably (e.g., flexibly, loosely) mounted to the HX frame 22. Referring to FIG. 8, each seal element 86, 88 may also extend around the HX core 24 and/or openings to the axial passages 78 to seal that HX core 24 against the HX frame 22. With such an arrangement, fluid may flow between the respective port 54, 56 and the axial passages 78 without (or with minimal) leakage around the HX core 24. Of course, a similar sealing arrangement may also or alternatively be provided at the inner and the outer sides 32, 34 of the respective HX core 24.

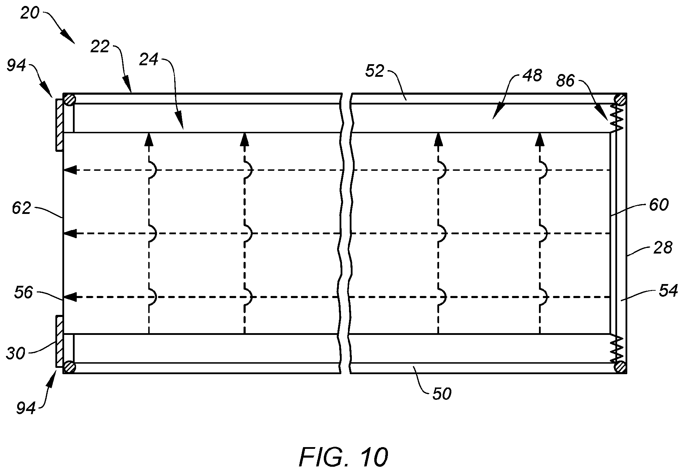

Referring to FIG. 9, each HX core 24 may also be retained (e.g., captured) within the respective core receptacle 48 using one or more retainers 90 and 92. The retainers 90 and 92 of FIG. 9, for example, may be fastened to the HX frame 22 at the opposing sides 28, 30 of the HX core 24. These retainers 90 and 92 may prevent the HX core 24 from passing through the respective ports 54, 56. However, the retainers 90 and 92 may be arranged to facilitate slight movement within the respective core receptacle 48. Here, no part of the HX core 24 of FIG. 9 may be fixedly secured to the HX frame 22. However, referring to FIG. 10, one side 62 (or 60) of each HX core 24 may alternatively be fixedly secured to the HX frame 22. The HX core 24 of FIG. 10, for example, is fixedly secured to the HX frame 22 at its side 30 (or 28) by at least one mount 94; e.g., a tab, a flange, etc. The opposing side 60 (or 62) of the HX core 24, however, may be disengaged from or otherwise not fixedly secured to the HX frame 22. Thus, this opposing side 60 (or 62) of the HX core 24 is configured to move relative to the HX frame 22.

With each of the retention techniques described above, at least a portion or an entirety of each HX core 24 is configured to move (e.g., shift, translate, slide, etc.) relative to the HX frame 22 while housed within the respective core receptacle 48. Each HX core 24, for example, may move axially, radially and/or laterally relative to / within the HX frame 22. This flexibility / structural decoupling between the HX cores 24 and the HX frame 22 facilitates thermal expansion and/or contraction of the HX cores 24 independent of the HX frame 22. Moreover, the slight spacing between the HX cores 24 facilitates relative axial, radial and/or lateral movement between the HX cores 24. This flexibility / structural decoupling between the HX cores 24 facilitates independent thermal expansion and/or contraction between the HX cores 24. The foregoing flexibility / structural decoupling may thereby reduce internal stresses and strains that may otherwise be imparted if the entire heat exchanger was formed as a single rigid body. In addition, providing the heat exchanger 20 with the HX cores 24 may facilitate simpler installation, inspection and/or repair.

Referring to FIG. 1, the heat exchanger 20 is configured with a first (e.g., axial) flowpath 96 and a second (e.g., radial) flowpath 98. The first flowpath 96 extends axially across the heat exchanger 20 and in parallel axially through the HX cores 24. This first flowpath 96, for example, may be formed by or otherwise include the axial passages 78 (see FIG. 6) in each of the HX cores 24. The second flowpath 98 extends radially across the heat exchanger 20 and in parallel radially through the HX cores 24. This second flowpath 98, for example, may be formed by or otherwise include the radial passages 72 (see FIG. 6) in each of the HX cores 24.

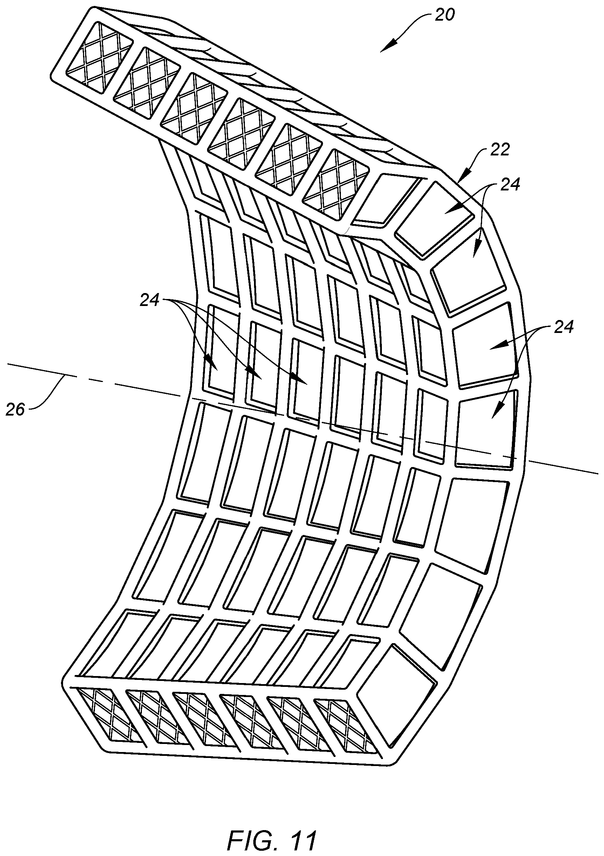

In some embodiments, referring to FIG. 1, the HX cores 24 are arranged in a single circumferentially extending array. Here, each HX core 24 is disposed laterally next to at least one of the other HX cores 24. In other embodiments, referring to FIG. 11, the HX cores 24 may also (or alternatively) be arranged in one or more axially extending arrays. Here, each HX core 24 is also (or alternatively) disposed axially next to at least one of the other HX cores 24. This may further reduce thermally induced stresses and/or strains within the heat exchanger 20.

In some embodiments, the heat exchanger 20 may be configured as a cooler. In other embodiments, the heat exchanger 20 may be configured as a heater. In other embodiments, the heat exchanger 20 may be configured as a condenser. In still other embodiments, the heat exchanger 20 may be configured as an evaporator. The present disclosure, however, is not limited to the foregoing exemplary heat exchanger configurations.

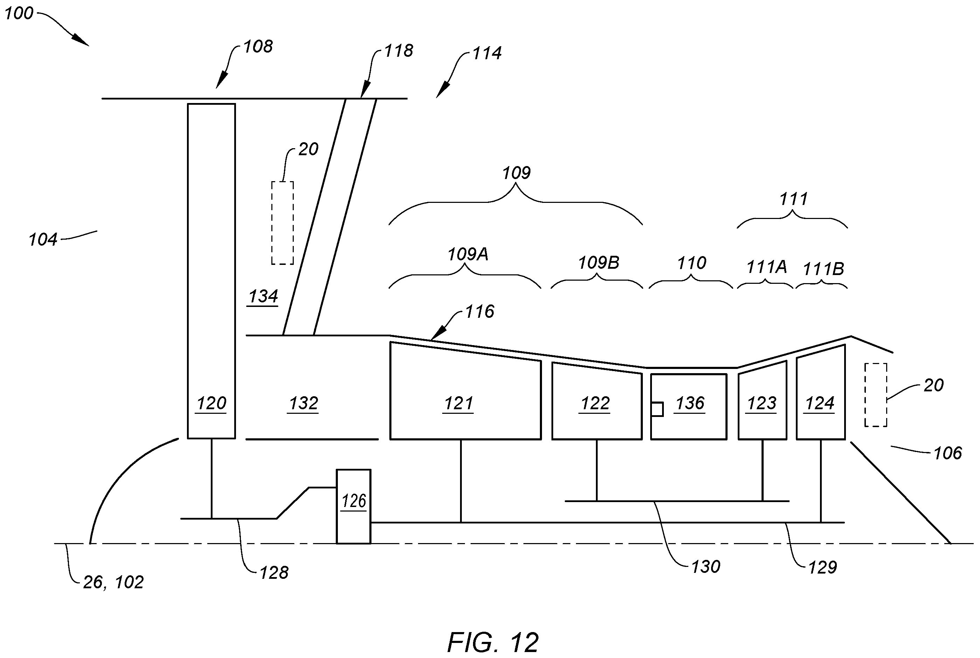

FIG. 12 illustrates an engine for the aircraft powerplant. This engine of FIG. 12 is configured as a gas turbine engine 100 such as turbofan engine. The turbine engine 100 extends axially along an axial centerline 102, which may be coaxial with the axis 26 of FIG. 1, between an upstream airflow inlet 104 and a downstream combustion products exhaust 106. The turbine engine 100 includes a fan section 108, a compressor section 109, a combustor section 110 and a turbine section 111. The compressor section 109 includes a low pressure compressor (LPC) section 109A and a high pressure compressor (HPC) section 109B. The turbine section 111 includes a high pressure turbine (HPT) section 111A and a low pressure turbine (LPT) section 111B.

The engine sections 108-111B may be arranged sequentially along the axial centerline 102 within an engine housing 114. This engine housing 114 includes an inner case 116 (e.g., a core case) and an outer case 118 (e.g., a fan case). The inner case 116 may house one or more of the engine sections 109A-111B; e.g., a core of the turbine engine 100. The outer case 118 may house at least the fan section 108.

Each of the engine sections 108, 109A, 109B, 111A and 111B includes a respective bladed rotor 120-124. Each of these bladed rotors 120-124 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 120 is connected to a geartrain 126, for example, through a fan shaft 128. The geartrain 126 and the LPC rotor 121 are connected to and driven by the LPT rotor 124 through a low speed shaft 129. The HPC rotor 122 is connected to and driven by the HPT rotor 123 through a high speed shaft 130. The shafts 128-130 are rotatably supported by a plurality of bearings; e.g., rolling element and/or thrust bearings. Each of these bearings is connected to the engine housing 114 by at least one stationary structure such as, for example, an annular support strut.

During operation, air enters the turbine engine 100 through the airflow inlet 104. This air is directed through the fan section 108 and into a core flowpath 132 and a bypass flowpath 134. The core flowpath 132 extends sequentially through the engine sections 109A-111B. The air within the core flowpath 132 may be referred to as "core air". The bypass flowpath 134 extends through a bypass duct, which bypasses the engine core. The air within the bypass flowpath 134 may be referred to as "bypass air". With such an arrangement, the first flowpath 96 (or the second flowpath 98) described above may be fluidly coupled in line with, configured as part of or otherwise receive the gas from (e.g., via a bleed) the core flowpath 132 or the bypass flowpath 134. The heat exchanger 20, for example, may be disposed in or extend across a respective one of the flowpaths 132, 134.

Referring still to FIG. 12, the core air is compressed by the LPC rotor 121 and the HPC rotor 122 and directed into a combustion chamber 136 of a combustor in the combustor section 110. Fuel is injected into the combustion chamber 136 and mixed with the compressed core air to provide a fuel-air mixture. This fuel-air mixture is ignited and combustion products thereof flow through and sequentially cause the HPT rotor 123 and the LPT rotor 124 to rotate. The rotation of the HPT rotor 123 and the LPT rotor 124 respectively drive rotation of the HPC rotor 122 and the HPC rotor 122 and, thus, compression of the core air received from a core airflow inlet. The rotation of the LPT rotor 124 also drives rotation of the fan rotor 120, which fan rotor 120 propels the bypass air through and out of the bypass flowpath 134. The propulsion of the bypass air may account for a majority of thrust generated by the turbine engine 100.

The heat exchanger 20 described above may be configured with various turbine engines other than the one described above. The heat exchanger 20, for example, may be configured with a geared turbine engine where a geartrain connects one or more shafts to one or more rotors in a fan section, a compressor section and/or any other engine section. Alternatively, the heat exchanger 20 may be configured with a turbine engine configured without a geartrain; e.g., a direct drive turbine engine. The turbine engine may be configured with a single spool, with two spools, or with more than two spools. The turbine engine may be configured as a turbofan engine, a turbojet engine, a turboprop engine, a turboshaft engine, a propfan engine, a pusher fan engine or any other type of turbine engine. The turbine engine may alternatively be configured as an auxiliary power unit (APU). The present disclosure therefore is not limited to any particular types or configurations of turbine engines. Moreover, the heat exchanger 20 may be utilized with other types of engines other than turbine engines; e.g., a rotary engine, a reciprocating piston engine, etc.

## Claims

1. An apparatus for an aircraft powerplant, comprising:
a heat exchanger (20) including a frame (22), a plurality of heat exchanger cores (24), a first flowpath (96) and a second flowpath (98);
the frame (22) extending circumferentially about an axis (26), and the frame (22) comprising a plurality of receptacles (48) within an interior of the frame (22);
each of the plurality of heat exchanger cores (24) housed within a respective one of the plurality of receptacles (48);
the first flowpath (96) extending in a first direction across the heat exchanger (20) and through the plurality of heat exchanger cores (24); and
the second flowpath (98) extending in a second direction across the heat exchanger (20) and through the plurality of heat exchanger cores (24), **characterized in that** a first of the plurality of heat exchanger cores (24) is configured to move, while housed within a first of the plurality of receptacles (48), at least one of
axially relative to the frame (22);
radially relative to the frame (22); or
laterally relative to the frame (22).

2. The apparatus of claim 1, wherein the first of the plurality of heat exchanger cores (24) is moveably secured to the frame (22) while housed within a first of the plurality of receptacles (48).

3. The apparatus of claim 1 or 2, wherein
the first of the plurality of heat exchanger cores (24) extends between opposing sides (60, 62);
the first of the plurality of heat exchanger cores (24) is fixedly secured to the frame (22) at a first of the opposing sides (62); and
the first of the plurality of heat exchanger cores (24) is moveable relative to the frame (22) at a second of the opposing sides (60).

4. The apparatus of any preceding claim, wherein
the frame (22) forms an exoskeleton around the plurality of heat exchanger cores (24).

5. The apparatus of any preceding claim, wherein
the frame (22) is configured as a lattice framework.

6. The apparatus of any preceding claim, wherein
the frame (22) includes a plurality of elongated members (42) arranged to form edges of a hexahedral unit (46); and
a first of the plurality of receptacles (48) is formed by and within the hexahedral unit (46).

7. The apparatus of any of claims 1 to 5, wherein
the frame (22) includes a plurality of lattice members (42) arranged to form a first hexahedral unit (46) and a second hexahedral unit (46), the first hexahedral unit (46) next to the second hexahedral unit (46), and the first hexahedral unit (46) sharing one or more of the plurality of lattice members (42) with the second hexahedral unit (46);
the first of the plurality of heat exchanger cores (24) arranged within the first hexahedral unit (46); and
a second of the plurality of heat exchanger cores (24) arranged within the second hexahedral unit (46).

8. The apparatus of claim 7, wherein
the plurality of lattice members (42) are arranged to further form a third hexahedral unit (46);
the first hexahedral unit (46) is between the second hexahedral unit (46) and the third hexahedral unit (46), and the first hexahedral unit (46) shares one or more of the plurality of lattice members (42) with the third hexahedral unit (46);
a third of the plurality of heat exchanger cores (24) arranged within the third hexahedral unit (46).

9. The apparatus of any preceding claim, wherein the frame (22) is configured as an arcuate body extending partially about the axis (26), optionally wherein a or the first of the plurality of heat exchanger cores (24) is circumferentially next to a second of the plurality of heat exchanger cores (24).

10. The apparatus of any of claims 1 to 8, wherein the frame (22) is configured as a full-hoop body around the axis (26).

11. The apparatus of any preceding claim, wherein a second of the plurality of heat exchanger cores (24) or a third of the plurality of heat exchanger cores (24) is axially next to a or the first of the plurality of heat exchanger cores (24).

12. The apparatus of any preceding claim, wherein the heat exchanger (20) further includes a first seal element (86) disposed at a first side (28) of the first of the plurality of heat exchanger cores (24); and
the first seal element (86) seals a first gap between the frame (22) and the first heat exchanger core (24), optionally wherein the first seal element (86) is compressed between the frame (22) and the first heat exchanger core (24).

13. The apparatus of claim 12, wherein
the heat exchanger (20) further includes a second seal element (88) disposed at a second side (30) of the first heat exchanger core (24) that is opposite the first side (28) of the first heat exchanger core (24); and
the second seal element (88) seals a second gap between the frame (22) and the first heat exchanger core (24).

14. The apparatus of any preceding claim, wherein
the first direction is an axial direction and the second direction is a radial direction; and/or
the apparatus further comprises an engine (100) comprising an engine flowpath (132, 134) and the first flowpath (96) is fluidly coupled with or configured as part of the engine flowpath (132, 134).

## Patentansprüche

1. Einrichtung für eine Antriebsanlage eines Luftfahrzeugs, umfassend:
einen Wärmetauscher (20), beinhaltet einen Rahmen (22), eine Vielzahl von Wärmetauscherkerne (24), einen ersten Strömungsweg (96) und einen zweiten Strömungsweg (98);
den Rahmen (22), der sich in Umfangsrichtung um eine Achse (26) erstreckt, und den Rahmen (22), umfassend eine Vielzahl von Aufnahmebehältern (48) innerhalb eines Innenraums des Rahmens (22) ;
jeden der Vielzahl von Wärmetauscherkerne (24), aufgenommen in einem jeweiligen eines der Vielzahl von Aufnahmebehälter (48); den ersten Strömungsweg (96), der sich in einer ersten Richtung quer über den Wärmetauscher (20) und durch die Vielzahl von Wärmetauscherkerne (24) erstreckt; und
den zweiten Strömungsweg (98), der sich in einer zweiten Richtung quer über den Wärmetauscher (20) und durch die Vielzahl von Wärmetauscherkerne (24) erstreckt, **dadurch gekennzeichnet, dass** ein erster der Vielzahl von Wärmetauscherkerne (24) ausgelegt ist, sich zu bewegen, während er in einem ersten der Vielzahl von Aufnahmebehälter (48) aufgenommen ist, in mindestens einem von
axial relativ zum Rahmen (22);
radial relativ zum Rahmen (22); oder
seitlich relativ zum Rahmen (22).

2. Einrichtung nach Anspruch 1, wobei der erste der Vielzahl von Wärmetauscherkerne (24) beweglich am Rahmen (22) befestigt ist, während er in einem ersten der Vielzahl von Aufnahmebehälter (48) aufgenommen ist.

3. Einrichtung nach Anspruch 1 oder 2, wobei
der erste der Vielzahl von Wärmetauscherkerne (24) sich zwischen gegenüberliegenden Seiten (60, 62) erstreckt;
der erste der Vielzahl von Wärmetauscherkerne (24) an einem ersten der gegenüberliegenden Seiten (62) fest am Rahmen (22) befestigt ist; und
der erste der Vielzahl von Wärmetauscherkerne (24) an einem zweiten der gegenüberliegenden Seiten (60) relativ zum Rahmen (22) beweglich ist.

4. Einrichtung nach einem der vorhergehenden Ansprüche, wobei der Rahmen (22) ein Exoskelett um die Vielzahl von Wärmetauscherkerne (24) bildet.

5. Einrichtung nach einem der vorhergehenden Ansprüche, wobei der Rahmen (22) als Gitterrahmen ausgelegt ist.

6. Einrichtung nach einem der vorhergehenden Ansprüche, wobei der Rahmen (22) eine Vielzahl von länglichen Elementen (42) beinhaltet, die angeordnet sind, um Kanten einer hexaedrischen Einheit (46) zu bilden; und
ein erster der Vielzahl von Aufnahmebehälter (48) durch die hexaedrische Einheit (46) und innerhalb der hexaedrischen Einheit (46) gebildet ist.

7. Einrichtung nach einem der Ansprüche 1 bis 5, wobei der Rahmen (22) eine Vielzahl von Gitterelementen (42) beinhaltet, die angeordnet sind, um eine erste hexaedrische Einheit (46) und eine zweite hexaedrische Einheit (46) zu bilden, wobei die erste hexaedrische Einheit (46) neben der zweiten hexaedrischen Einheit (46) liegt und die erste hexaedrische Einheit (46) eines oder mehrere der Vielzahl von Gitterelementen (42) mit der zweiten hexaedrischen Einheit (46) teilt;
der erste der Vielzahl von Wärmetauscherkerne (24) innerhalb der ersten hexaedrischen Einheit (46) angeordnet ist; und
ein zweiter der Vielzahl von Wärmetauscherkerne (24) innerhalb der zweiten hexaedrischen Einheit (46) angeordnet ist.

8. Einrichtung nach Anspruch 7, wobei
die Vielzahl von Gitterelementen (42) angeordnet sind, um ferner eine dritte hexaedrische Einheit (46) zu bilden;
die erste hexaedrische Einheit (46) zwischen der zweiten hexaedrischen Einheit (46) und der dritten hexaedrischen Einheit (46) liegt und die erste hexaedrische Einheit (46) eines oder mehrere der Vielzahl von Gitterelementen (42) mit der dritten hexaedrischen Einheit (46) teilt;
ein dritter der Vielzahl von Wärmetauscherkerne (24) innerhalb der dritten hexaedrischen Einheit (46) angeordnet ist.

9. Einrichtung nach einem der vorhergehenden Ansprüche, wobei der Rahmen (22) als bogenförmiger Körper ausgelegt ist, der sich teilweise um die Achse (26) erstreckt, wobei optional ein oder der erste der Vielzahl von Wärmetauscherkerne (24) in Umfangsrichtung neben einem zweiten der Vielzahl von Wärmetauscherkerne (24) liegt.

10. Einrichtung nach einem der Ansprüche 1 bis 8, wobei der Rahmen (22) als Vollringkörper um die Achse (26) ausgelegt ist.

11. Einrichtung nach einem der vorhergehenden Ansprüche, wobei ein zweiter der Vielzahl von Wärmetauscherkerne (24) oder ein dritter der Vielzahl von Wärmetauscherkerne (24) axial neben einem oder dem ersten der Vielzahl von Wärmetauscherkerne (24) liegt.

12. Einrichtung nach einem der vorhergehenden Ansprüche, wobei der Wärmetauscher (20) ferner ein erstes Dichtelement (86) beinhaltet, das an einer ersten Seite (28) des ersten der Vielzahl von Wärmetauscherkerne (24) angeordnet ist; und
das erste Dichtelement (86) einen ersten Spalt zwischen dem Rahmen (22) und dem ersten Wärmetauscherkern (24) abdichtet, wobei optional das erste Dichtelement (86) zwischen dem Rahmen (22) und dem ersten Wärmetauscherkern (24) verpresst ist.

13. Einrichtung nach Anspruch 12, wobei
der Wärmetauscher (20) ferner ein zweites Dichtelement (88) beinhaltet, das an einer zweiten Seite (30) des ersten Wärmetauscherkerns (24) angeordnet ist, die der ersten Seite (28) des ersten Wärmetauscherkerns (24) gegenüberliegt; und das zweite Dichtelement (88) einen zweiten Spalt zwischen dem Rahmen (22) und dem ersten Wärmetauscherkern (24) abdichtet.

14. Einrichtung nach einem der vorhergehenden Ansprüche, wobei die erste Richtung eine axiale Richtung und die zweite Richtung eine radiale Richtung ist; und/oder
die Einrichtung ferner ein Triebwerk (100) umfasst, das einen Triebwerksströmungsweg (132, 134) umfasst, und der erste Strömungsweg (96) mit dem Triebwerksströmungsweg (132, 134) fluidisch gekoppelt oder als Teil des Triebwerksströmungswegs (132, 134) ausgelegt ist.

## Revendications

1. Appareil pour un groupe motopropulseur d'aéronef, comprenant :
un échangeur de chaleur (20) comportant un cadre (22), une pluralité de noyaux d'échangeur de chaleur (24), un premier trajet d'écoulement (96) et un second trajet d'écoulement (98) ;
le cadre (22) s'étendant circonférentiellement autour d'un axe (26), et le cadre (22) comprenant une pluralité de logements (48) à l'intérieur du cadre (22) ;
chacun de la pluralité de noyaux d'échangeur de chaleur (24) étant logé à l'intérieur de l'un logement respectif de la pluralité de logements (48) ;
le premier trajet d'écoulement (96) s'étendant dans une première direction à travers l'échangeur de chaleur (20) et à travers la pluralité de noyaux d'échangeur de chaleur (24) ; et
le second trajet d'écoulement (98) s'étendant dans une seconde direction à travers l'échangeur de chaleur (20) et à travers la pluralité de noyaux d'échangeur de chaleur (24), **caractérisé en ce qu'**un premier de la pluralité de noyaux d'échangeur de chaleur (24) est conçu pour se déplacer, lorsqu'il est logé à l'intérieur d'un premier de la pluralité de logements (48), d'au moins une manière parmi
axialement par rapport au cadre (22) ;
radialement par rapport au cadre (22) ; ou
latéralement par rapport au cadre (22).

2. Appareil selon la revendication 1, dans lequel le premier de la pluralité de noyaux d'échangeur de chaleur (24) est fixé de manière mobile au cadre (22) tout en étant logé à l'intérieur d'un premier de la pluralité de logements (48).

3. Appareil selon la revendication 1 ou 2, dans lequel le premier de la pluralité de noyaux d'échangeur de chaleur (24) s'étend entre des côtés opposés (60, 62) ;
le premier de la pluralité de noyaux d'échangeur de chaleur (24) est fixé de manière fixe au cadre (22) au niveau d'un premier des côtés opposés (62) ; et
le premier de la pluralité de noyaux d'échangeur de chaleur (24) peut se déplacer par rapport au cadre (22) au niveau d'un second des côtés opposés (60).

4. Appareil selon l'une quelconque revendication précédente, dans lequel
le cadre (22) forme un exosquelette autour de la pluralité de noyaux d'échangeur de chaleur (24).

5. Appareil selon l'une quelconque revendication précédente, dans lequel
le cadre (22) est conçu comme une structure en treillis.

6. Appareil selon l'une quelconque revendication précédente, dans lequel
le cadre (22) comporte une pluralité d'éléments allongés (42) disposés pour former des arêtes d'une unité hexaédrique (46) ; et
un premier de la pluralité de logements (48) est formé par et à l'intérieur de l'unité hexaédrique (46).

7. Appareil selon l'une quelconque des revendications 1 à 5, dans lequel
le cadre (22) comporte une pluralité d'éléments de treillis (42) disposés pour former une première unité hexaédrique (46) et une deuxième unité hexaédrique (46), la première unité hexaédrique (46) étant située à côté de la deuxième unité hexaédrique (46), et la première unité hexaédrique (46) partageant l'un ou plusieurs de la pluralité d'éléments de treillis (42) avec la deuxième unité hexaédrique (46) ;
le premier de la pluralité de noyaux d'échangeur de chaleur (24) disposé à l'intérieur de la première unité hexaédrique (46) ; et
un deuxième de la pluralité de noyaux d'échangeur de chaleur (24) disposé à l'intérieur de la deuxième unité hexaédrique (46).

8. Appareil selon la revendication 7, dans lequel la pluralité des éléments de treillis (42) sont disposés pour former en outre une troisième unité hexaédrique (46) ;
la première unité hexaédrique (46) est située entre la deuxième unité hexaédrique (46) et la troisième unité hexaédrique (46), et la première unité hexaédrique (46) partage l'un ou plusieurs de la pluralité d'éléments de treillis (42) avec la troisième unité hexaédrique (46) ;
un troisième de la pluralité de noyaux d'échangeur de chaleur (24) disposé à l'intérieur de la troisième unité hexaédrique (46).

9. Appareil selon l'une quelconque revendication précédente, dans lequel le cadre (22) est conçu comme un corps arqué s'étendant partiellement autour de l'axe (26), optionnellement, dans lequel l'un ou le premier de la pluralité de noyaux d'échangeur de chaleur (24) est situé circonférentiellement à côté d'un deuxième de la pluralité de noyaux d'échangeur de chaleur (24).

10. Appareil selon l'une quelconque des revendications 1 à 8, dans lequel le cadre (22) est conçu comme un corps en anneau complet autour de l'axe (26).

11. Appareil selon l'une quelconque revendication précédente, dans lequel un deuxième de la pluralité de noyaux d'échangeur de chaleur (24) ou un troisième de la pluralité de noyaux d'échangeur de chaleur (24) est situé axialement à côté d'un ou du premier de la pluralité de noyaux d'échangeur de chaleur (24).

12. Appareil selon l'une quelconque revendication précédente, dans lequel l'échangeur de chaleur (20) comporte en outre un premier élément d'étanchéité (86) disposé au niveau d'un premier côté (28) du premier de la pluralité de noyaux d'échangeur de chaleur (24) ; et
le premier élément d'étanchéité (86) assure l'étanchéité d'un premier espace entre le cadre (22) et le premier noyau d'échangeur de chaleur (24), optionnellement, dans lequel le premier élément d'étanchéité (86) est comprimé entre le cadre (22) et le premier noyau d'échangeur de chaleur (24).

13. Appareil selon la revendication 12, dans lequel l'échangeur de chaleur (20) comporte en outre un second élément d'étanchéité (88) disposé au niveau d'un second côté (30) du premier noyau d'échangeur de chaleur (24) qui est opposé au premier côté (28) du premier noyau d'échangeur de chaleur (24) ; et
le second élément d'étanchéité (88) assure l'étanchéité d'un second espace entre le cadre (22) et le premier noyau d'échangeur de chaleur (24).

14. Appareil selon l'une quelconque revendication précédente, dans lequel
la première direction est une direction axiale et la seconde direction est une direction radiale ; et/ou
l'appareil comprend en outre un moteur (100) comprenant un trajet d'écoulement de moteur (132, 134) et le premier trajet d'écoulement (96) est accouplé fluidiquement à ou conçu comme partie intégrante du trajet d'écoulement de moteur (132, 134).
